# EUROPÄISCHE PATENTSCHRIFT

(11) **EP 1 916 156 B1**
(45) Veröffentlichungstag und Bekanntmachung des Hinweises auf die Patenterteilung: **16.12.2009**
(21) Anmeldenummer: 07020100.9
(22) Anmeldetag: 13.10.2007
(51) Int. Cl.: B60R 3/02, B61D 23/02

(54) **Ein-Ausstiegsvorrichtung für ein Fahrzeug des öffentlichen Personenverkehrs mit einem Rahmen angeordneten Schiebetritt**
Embarking/disembarking device for a public transport vehicle with a retractable step fitted in a frame
Dispositif d'entrée et de sortie pour un véhicule de transport en commun doté d'une marche coulissante agencée à l'aide d'un cadre

(30) Priorität: 26.10.2006 DE 202006016432 U
(43) Veröffentlichungstag der Anmeldung: 30.04.2008
(73) Patentinhaber: Gebr. Bode GmbH & Co. KG, 34123 Kassel (DE)
(72) Erfinder: Rasekhi Coochesfahani, Abbas, 34128 Kassel (DE)
(74) Vertreter: Bauer Vorberg Kayser Patentanwälte

(56) Entgegenhaltungen:
- EP-A- 1 393 977
- EP-A- 1 449 722
- EP-A- 1 470 959
- WO-A-2006/078195
- DE-A1- 19 608 048

## Beschreibung

Die Erfindung betrifft eine Ein-/Ausstiegsvorrichtung für ein Fahrzeug des öffentlichen Personenverkehrs mit einem in einem Rahmen angeordneten Schiebetritt mit den Merkmalen aus dem Oberbegriff des Patentanspruchs 1, wie offenbart in EP 1 470 959 A.

Schiebetritte werden verwendet, um Personen das Ein- und Aussteigen in ein Fahrzeug des öffentlichen Personenverkehrs zu erleichtern. Sie weisen aus diesem Grund einen ein- und ausfahrbaren Ausschub mit einer belastbaren Trittfläche auf. Der Schiebetritt kann in einem Rahmen als Aufnahmevorrichtung angeordnet sein, welcher fest mit dem Fahrzeug verbunden ist. Hierzu wird der Schiebetritt durch eine Einschuböffnung in den Rahmen eingeschoben und mittels einer oder mehrerer Befestigungseinrichtungen am Rahmen befestigt. Vorzugsweise liegt eine Schraubverbindung vor.

Häufig schreiben Länder für Fahrzeuge des öffentlichen Personenverkehrs die Einbauhöhe der Ein-/Ausstiegsvorrichtung vor bzw. die Höhe der Station, wie beispielsweise die Bahnsteigshöhe. Länder können jedoch unterschiedliche Höhen vorschreiben, so dass ein Fahrzeug im ländergrenzenüberschreitenden Verkehr nur in vermindertem Maße eingesetzt werden.

Es ist die Aufgabe der Erfindung, eine Ein-/Ausstiegsvorrichtung auszugestalten, die den beschriebenen Nachteil beseitigt.

Die Erfindung löst die Aufgabe mit den Merkmalen aus dem kennzeichnenden Teil des Patentanspruchs 1. Vorteilhafte Weiterbildungen sind in den abhängigen Ansprüchen beschrieben.

Die erfindungsgemäße Ein-/Ausstiegsvorrichtung weist zusätzlich zu dem ersten Schiebetritt mindestens einen zweiten Schiebetritt auf, der über oder unter dem ersten angeordnet sein kann. Bevorzugt weist die Ein-/Ausstiegsvorrichtung für jeden Schiebetritt mindestens eine Befestigungseinrichtung auf. Der zweite Schiebetritt kann in einer anderen Ausgestaltung auch über den ersten Schiebetritts mit dem Fahrzeug verbunden sein. Wenn die Ein-/Ausstiegsvorrichtung beispielsweise zwei Schiebtritte aufweist, so kann das Fahrzeug in zwei Ländern mit unterschiedlichen Einstiegshöhen eingesetzt werden. Die Ansteuerung der Schiebetritt kann derart ausgestaltet sein, dass der Fahrer des Fahrzeugs beim Grenzübertreten einen Schalter betätigt, wodurch bestimmt wird, welcher Schiebetritt an den Stationen ausfährt.

Die Schiebetritte können auch derart angesteuert werden, dass die Ausschübe an einer Station unterschiedlich weit ausfahren, so dass die Trittflächen eine Treppe bilden.

Reparaturen oder Wartungen die Montage und Demontage eines Schiebetritts in einen bzw. aus einem bereits im Fahrzeug eingebauten Rahmen sind aufwändig. Zumeist ist nur der vordere Bereich des Rahmens, d.h. der Bereich der Einschuböffnung, zugänglich, nicht aber der hintere Bereich, so dass das Lösen der Befestigungseinrichtungen im hinteren Bereich nur unter großem Aufwand möglich ist.

Die Ein-/Ausstiegsvorrichtung kann aus diesem Grund eine Zentriereinrichtung für mindestens einen Schiebetritt aufweisen, welche ein fest am Rahmen angeordnetes und ein fest am Schiebetritt angeordnetes Zentrierelement umfasst, welche derart zusammenwirken, dass beim Einschieben eines Schiebetritts in den Rahmen der Schiebetritt in eine vorgegebene Position positioniert wird. Somit ist es möglich, dass die Schiebetritte im hinteren, unzugänglichen Bereich nicht mehr befestigt werden müssen. Vorteilhaft ist ferner, wenn die Befestigungseinrichtungen im Bereich der Einschuböffnung angeordnet sind und die Zentriereinrichtungen im der Einschuböffnung gegenüberliegenden Bereich, d.h. im hinteren Bereich der Vorrichtung, angeordnet sind. Dadurch ist eine allein frontseitige Befestigung für die Fixierung des Systems ausreichend. Als Befestigungsvorrichtung kann in vorteilhafter Weise eine Schraubverbindung verwendet werden.

In einer vorteilhaften Ausgestaltung können alle Schiebetritte hinsichtlich der Befestigungselemente und Zentrierelemente sowie insbesondere der Steckelemente gleich ausgestaltet sein. Dementsprechend können auch die einzelnen Einschübe des Rahmens hinsichtlich der Befestigungselemente und Zentrierelemente sowie vorzugsweise der Steckelemente gleich ausgestaltet sein. Somit wird eine modulare Bauweise erreicht, so dass die Schiebetritte beliebig austauschbar sind.

Die Ein-/Ausstiegsvorrichtung kann für mindestens einen Schiebetritt mehrere Zentriereinrichtungen aufweisen, welche insbesondere nebeneinander angeordnet sind, so dass eine verbesserte Positionierung des Schiebetritts erreicht wird.

Ein Schiebetritt benötigt zumeist eine elektrische Anbindung für die Zuleitung von elektrischer Energie und für die Signalübertragung. Dadurch dass der hintere Bereich nicht mehr zugänglich zu sein braucht, sollte auch die elektrische Anbindung nicht mehr durch eine manuelle Steckverbindung im hinteren Bereich geleistet werden. Deswegen kann die Ein-/Ausstiegsvorrichtung für mindestens einen Schiebetritt eine elektrische Steckeinrichtung aufweisen, welche ein fest am Rahmen angeordnetes und ein fest am Schiebetritt angeordnetes Steckelement umfasst, welche derart zusammenwirken, dass im eingeschobenen Zustand des Schiebetritts eine Steckverbindung für die elektrische Anbindung des Schiebetritts besteht. Vorzugsweise ist die Steckverbindung wasserdicht ausgestaltet. Durch die Zentriervorrichtung wird gewährleistet, dass auch die Steckelemente beim Einschieben des Schiebetritts positionsrichtig zusammenwirken. Der Schiebetritt kann nach dem Einschieben und Befestigen ohne weiteren Aufwand in Betrieb genommen werden.

Um das Einschieben der Schiebetritte in den Rahmen zu erleichtern, kann der Rahmen Führungsvorrichtungen, insbesondere Gleitschienen, aufweisen.

Durch die Zentriereinrichtungen können die Schiebetritte justiert und in Position gehalten werden. In einer bevorzugten Ausgestaltung ist ein Zentrierelement als Zapfen und das damit zusammenwirkende Zentrierelement als entsprechende Buchse, insbesondere aus Kunststoff, ausgebildet. Durch diese Ausgestaltung wird eine sichere Positionierung erreicht, zugleich ist die Konstruktion im hinteren Bereich stabiler. Eine verbesserte Wirkung der Positionierung kann noch erreicht werden, wenn der Zapfen einen kegelförmigen oder kegelstumpfförmigen Abschnitt aufweist.

Um die Ausmaße des Rahmens möglichst gering zu halten, kann der Zapfen am Rahmen und die Buchse an den Schiebetritten angeordnet sein.

Um die Montage noch weiter zu vereinfachen, können mindestens ein Schiebetritt und der Rahmen derart ausgestaltet sein, dass der Schiebetritt auch um 180° bezüglich zu einer Drehachse, welche parallel zur Ausfahrrichtung verläuft, gedreht in den Rahmen einschiebbar ist. Dies ist insbesondere dann vorteilhaft, wenn die Schiebetritte nicht symmetrisch ausgestaltet sind, so dass sich durch die Drehung um 180° eine veränderte Höhe der Trittfläche ergibt, so dass die Höhe in einfacher Weise an das Fahrzeug angepasst werden kann.

Als Antrieb kann mindestens ein Schiebetritt einen im Schiebetritt angeordneten elektrischen Motor und eine Spindelvorrichtung aufweisen. In einer bevorzugten Ausgestaltung weist mindestens ein Schiebetritt eine Federkraftbremse und eine als Notentriegelungsvorrichtung wirkende Brems-Lüftungseinheit auf. Dies ermöglicht dem System im stromlosen Zustand, dass der Ausschub an jeder gewünschten Position gehalten bzw. verriegelt werden kann.

In einer vorteilhaften Ausgestaltung ist die Ein-/Ausstiegsvorrichtung derart ausgestaltet, dass das Eindringen von Wasser in den unteren Fahrzeugbereich verhindert wird und dass sie schalldämmend ist. Hierfür kann der Rahmen eine zur Trittfläche parallel verlaufende geschlossene Fläche aufweisen, auf welcher mindestens eine schalldämmende Matte angeordnet ist. Die mindestens eine Matte kann bevorzugt auch an der Unterseite der Fläche angeordnet sein, so dass im Falle eines Eindringens von Wasser die Matte nicht über einen längeren Zeitraum unter Wasser steht. Ferner kann die Ein-/Ausstiegsvorrichtung im Bereich der Einschuböffnung ein am Rahmen angeordnetes Wasserauffangblech aufweisen, so dass das Wasser nur frontal nach außen abfließen kann.

Die Ein-/Ausstiegsvorrichtung kann einen Sicherheitsschalter aufweisen, der bei eingefahrenem Zustand des Ausschubs betätigt wird und zugleich eine Haltefunktion für den Ausschub aufweist, so dass eine redundante Sicherung gegen ein unbeabsichtigtes Ausfahren erreicht wird.

Der Rahmen ist fest mit dem Fahrzeug verbunden. In einer vorteilhaften Ausgestaltung kann der Rahmen mittels ausrichtbaren Befestigungsvorrichtungen am Fahrzeug befestigt sein. Die Ausrichtbarkeit in alle drei Raumrichtungen kann durch zwei Winkelhalterungen erreicht werden, welche quer zueinander liegende Langlöcher aufweisen, wobei die Ausrichtung in der dritten Richtung durch Distanzscheiben erfolgt.

Ein mögliches Ausführungsbeispiel der Erfindung wird anhand der Figuren 1 bis 16 beschrieben. Es zeigen:
- Fig. 1: eine Ein-/Ausstiegsvorrichtung mit einem Rahmen und zwei Schiebetritten;
- Fig. 2: einen Schiebetritt aus Fig. 1;
- Fig. 3: den Schiebetritt gemäß Fig. 2 in einer um 180° gedrehten Ansicht;
- Fig. 4: eine vergrößerte Darstellung eines am Rahmen angebrachten Zentrierzapfens;
- Fig. 5: eine vergrößerte Darstellung einer am Schiebetritt angeordneten Zentrierbuchse;
- Fig. 6: eine vergrößerte Darstellung eines Befestigungselements an einem Schiebetritt;
- Fig. 7: eine vergrößerte Darstellung einer Befestigungsvorrichtung am Rahmen;
- Fig. 8: eine Explosionsdarstellung der Befestigungsvorrichtung nach Fig. 7
- Fig. 9: eine vergrößerte Darstellung der Steckelemente;
- Fig. 10: die zusammengesteckten Steckelemente;
- Fig. 11: die Steckelemente und Zentrierelemente ein einer Einzeldarstellung;
- Fig. 12: den am Rahmen angebrachte Zentrierzapfen und einen Stecker;
- Fig. 13: den Stecker in einer vergrößerten Darstellung;
- Fig. 14: den Stecker in einer Rückansicht;
- Fig. 15: einen Sicherheitsschalter bei ausgefahrenem Zustand des Schiebetritts;
- Fig. 16: den Sicherheitsschalter bei eingefahrenem Zustand des Schiebetritts.

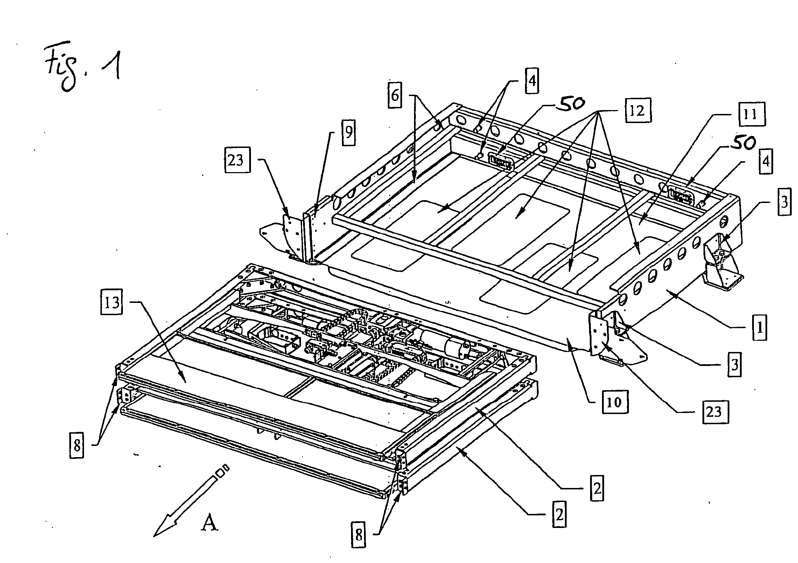

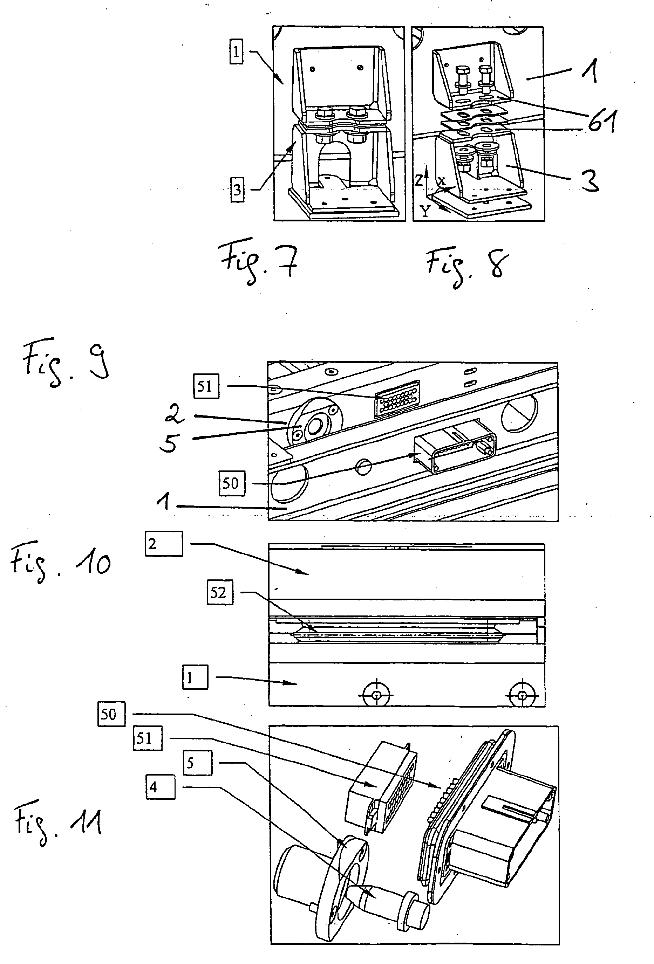

Die **Fig. 1** zeigt eine Ein-/Ausstiegsvorrichtung mit einem Rahmen 1 und zwei in den Rahmen 1 einzeln einschiebbaren, baugleichen Schiebetritten 2. Der Rahmen 1 ist fest über vier Befestigungsvorrichtungen 3 mit einem nicht dargestellten Fahrzeug verbunden. Eine Befestigungsvorrichtung 3 ist in den **Fig. 7** und **Fig. 8** vergrößert dargestellt. Für eine genaue Ausrichtung weisen die Befestigungsvorrichtungen 3 quer zueinander liegende Langlöcher 61 auf.

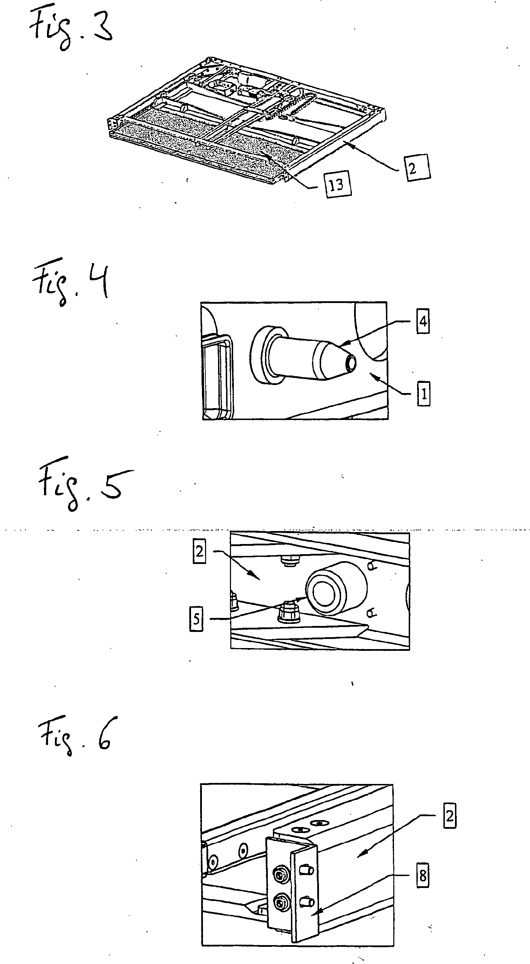

Die Ein-/Ausstiegsvorrichtung weist für jeden Schiebetritt 2 zwei Zentriereinrichtungen auf. Die Schiebetritte 2 weisen an der Rückseite jeweils zwei Zentrierbuchsen 5 aus Kunststoff als Zentrierelemente auf, welche im eingeschobenen Zustand eines Schiebetritts 2 mit am Rahmen 1 angeordneten Zentrierzapfen 4 aus Metall als Zentrierelemente zusammenwirken. Ein Zentrierzapfen 4 mit einem kegelstumpfförmigen Endabschnitt ist in **Fig. 4** und eine Zentrierbuchse 5 ist in **Fig. 5** vergrößert dargestellt.

Der Rahmen 1 weist für jeden Schiebetritt zwei Gleitschienen 6 als Führungsvorrichtungen auf. Für die elektrische Anbindung der Schiebetritte 2 weist der Rahmen zwei Stecker 50 auf, wobei jeder im eingeschobenen Zustand eines Schiebetritts 2 mit einer als Gegenstück ausgebildeten und an der Rückseite des Schiebetritts 2 angeordneten, in Fig. 9 dargestellten Steckdose 51 derart zusammenwirkt, dass eine elektrische Verbindung besteht.

Bei der Montage werden die Schiebetritte 2 einzeln durch die Einschuböffnung 10 an der Frontseite in den Rahmen 1 eingeschoben, bis sie von den Zentriereinrichtungen geführt und positioniert am hinteren Teil des Rahmens 1 anschlagen. Anschließend werden die Schiebetritte 2 über Befestigungseinrichtungen am Rahmen 1 verschraubt. Der Rahmen weist zu diesem Zweck Bohrungen 9 als Befestigungselemente auf. Die Schiebetritte 2 weisen entsprechende Haltewinkel 8 als Befestigungselemente auf. Ein Haltewinkel 8 ist in Fig. 6 vergrößert dargestellt. Dadurch, dass die Befestigungseinrichtungen im eingeschobenen Zustand der Schiebetritte 2 im Bereich der Einschuböffnung 10 liegen, sind diese leicht zugänglich, so dass eine Montage in wenigen Minuten durchführbar ist.

Für eine verbesserte Schalldämmung und zum Schutz gegen eindringendes Wasser weist der Rahmen 1 eine zur Trittfläche 13 parallel verlaufende, geschlossene Bodenfläche 11 auf, auf deren Unterseite vier schalldämmende Matten 12 durch Klebung befestigt sind.

Zum Anbringen einer fahrzeugspezifischen Blende weist der Rahmen 1 im Bereich der Einschuböffnung 10 beidseitig Befestigungswinkel 23 auf.

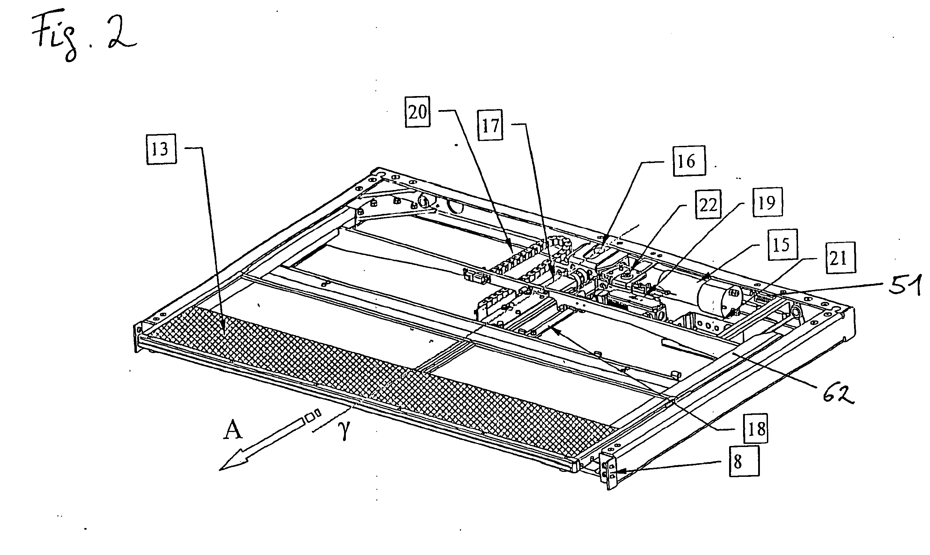

Die **Fig. 2** zeigt einen Schiebetritt 2 mit einem in Ausfahrrichtung A ausgefahrenen Ausschub 62 mit einer belastbaren Trittfläche 13. Die Ausfahrbewegung wird von einem Elektromotor 15 über ein Winkelgetriebe 16 und über eine Spindelvorrichtung mit einem Spindelrohr 17 bewirkt. Damit die Bewegung geführt ist, weist der Schiebetritt 2 eine Führungsschiene 18 auf. Die elektrischen Leitungen für die Übermittlung von elektrischer Energie und elektrischen Signalen zum Ausschub 62 befinden sich in einer an einen Klemmkasten 21 angeschlossenen Energiekette 20. Der Antrieb weist eine integrierte Federkraftbremse als Halter auf, welche von einer als Notentriegelungseinheit wirkende Brems-Lüftungseinheit 22 gelöst werden kann.

In **Fig. 3** ist ein Schiebetritt 2 in einer um 180° gedrehten Ansicht dargestellt. Die Schiebetritte 2 sind derart ausgestaltet, dass sie auch um 180° bezüglich zur Drehachse γ, welche parallel zur Ausfahrrichtung A verläuft, gedreht in den Rahmen 1 einschiebbar sind. Der Ausschub 62 weist somit auf beiden Seiten eine Trittfläche 13 auf. In der gedrehten Stellung ist der Abstand der Trittfläche 13 vom Rahmen 1 verändert, so dass der Schiebetritt in einfacher Weise hinsichtlich der Höhe der Trittfläche 13 über dem Erdboden an das Fahrzeug angepasst werden kann.

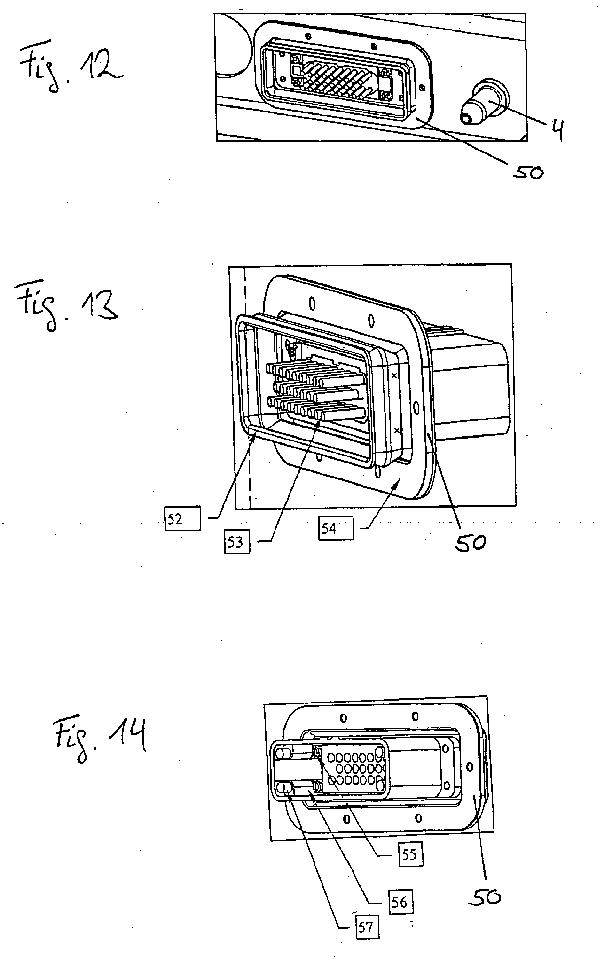

Die Herstellung der elektrischen Verbindung zwischen Rahmen 1 und Schiebetritt 2 ist in den **Fig. 9 bis Fig. 14** dargestellt. Am Rahmen 1 ist neben dem Zentrierzapfen 4 ein Stecker 50 als erstes Steckelement angeordnet. Der Stecker 50 weist mehrer Pins 53 auf, welche in entsprechende Buchsen der am Schiebetritt 2 angeordneten Steckdose 51 als zweites Steckelement zusammenwirken. Die Steckdose 51 mit zum sicheren Positionieren trichterförmiger Steckdosenmundung ist elektrisch mit dem Klemmkasten 21 für die Verteilung der elektrischen Signale und der elektrischen Energie verbunden. Der Stecker 50 weist einen Faltenbalg 52 auf, der an einem Befestigungsblech 54 angeordnet ist. Der Faltenbalg 52 bewirkt eine in Fig. 10 dargestellte wasserdichte Verbindung im eingesteckten Zustand der Steckeinrichtung. An der Rückseite des Steckers befinden sich Druckfedern 55, welche auf in Führungsbuchsen 56 laufenden Führungsstangen 57 wirken, so dass eine sichere Steckverbindung erreicht wird.

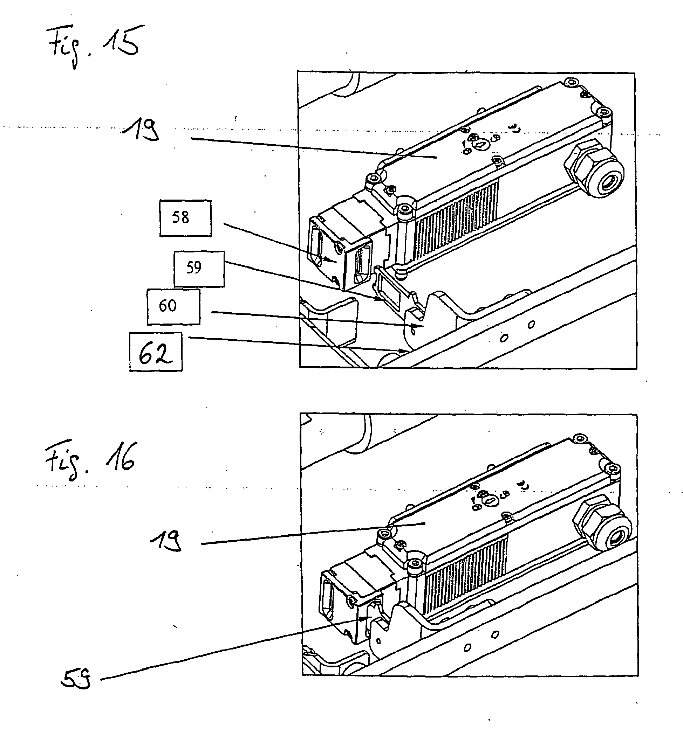

In **Fig. 15** ist ein im Schiebetritt 2 angeordneter Sicherheitsschalter 19 dargestellt, welcher für die Sensierung des eingefahrenen Zustands des Ausschubs 62 zuständig ist. Aus diesem Grund ist an dem Ausschub 62 über eine Halterung 60 ein Betätiger 59 in Form eines rechteckigen Rahmens angeordnet, welcher in dem in **Fig. 16** dargestellten, eingefahrenen Zustand des Ausschubs 62 in einen Betätigungskopf 58 des Sicherheitsschalters 19 eingerastet ist und somit den Schalter betätigt. Der Sicherheitsschalter 19 weist zugleich eine Haltefunktion für den Ausschub 62 auf. In nicht dargestellter Weise befinden sich innerhalb des Betätigungskopfs 5 Mittel, welche den rahmenförmigen Betätiger 59 im eingefahrenen Zustand formschlüssig verriegeln, so dass der Ausschub 62 gegen ein zufälliges Ausfahren redundant gesichert ist.

## Patentansprüche

1. Ein-/Ausstiegsvorrichtung für ein Fahrzeug des öffentlichen Personenverkehrs mit einem ersten Schiebetritt (2), wobei der Schiebetritt (2) in einen mit einem Fahrzeug fest verbundenen Rahmen (1) durch eine Einschuböffnung (10) einschiebbar ist und einen durch einen Antrieb (15) ein- und ausfahrbaren Ausschub (62) mit einer Trittfläche (13) aufweist, und wobei die Ein-/Ausstiegsvorrichtung für den Schiebetritt (2) mindestens eine Befestigungseinrichtung aufweist, welche jeweils ein am Rahmen (1) angeordnetes und ein am Schiebetritt (2) angeordnetes Befestigungselement (8, 9) umfasst, mittels welcher der Schiebetritt (2) am Rahmen (1) befestigbar ist, **dadurch gekennzeichnet,**
**dass** die Ein-/Ausstiegsvorrichtung mindestens einen zweiten Schiebetritt (2) aufweist, der über oder unter dem ersten Schiebtritt (2) angeordnet ist.

2. Ein-/Ausstiegsvorrichtung nach Anspruch 1, **dadurch gekennzeichnet, dass** sie für jeden Schiebetritt (2) mindestens eine Befestigungseinrichtung (8, 9) aufweist.

3. Ein-/Ausstiegsvorrichtung nach Anspruch 1 oder 2, **dadurch gekennzeichnet, dass** sie für mindestens einen Schiebetritt (2) eine Zentriereinrichtung aufweist, welche jeweils ein fest am Rahmen (1) angeordnetes und ein fest am Schiebetritt (2) angeordnetes Zentrierelement (4, 5) umfasst, welche derart zusammenwirken, dass beim Einschieben des Schiebetritts (2) in den Rahmen (1) der Schiebetritt (2) in eine vorgegebene Position positioniert wird.

4. Ein-/Ausstiegsvorrichtung nach einem der vorhergehenden Ansprüche, **dadurch gekennzeichnet, dass** sie für mindestens einen Schiebetritt (2) eine elektrische Steckeinrichtung aufweist, welche ein fest am Rahmen (1) angeordnetes und ein fest am Schiebetritt (2) angeordnetes Steckelement (50, 51) umfasst, welche derart zusammenwirken, dass im eingeschobenen Zustand eines Schiebetritts (2) eine insbesondere wasserdichte Steckverbindung für die elektrische Anbindung des Schiebetritts (2) besteht.

5. Ein-/Ausstiegsvorrichtung nach Anspruch 3 oder 4, **dadurch gekennzeichnet, dass** alle Schiebetritte (2) hinsichtlich der Befestigungselemente (9) und Zentrierelemente (5) sowie insbesondere der Steckelemente (50, 51) gleich ausgestaltet sind.

6. Ein-/Ausstiegsvorrichtung nach einem der vorhergehenden Ansprüche, **dadurch gekennzeichnet, dass** die Befestigungseinrichtungen (8, 9) im Bereich der Einschuböffnung (10) angeordnet sind und dass die Zentriereinrichtungen (4, 5) im der Einschuböffnung gegenüberliegenden Bereich der Vorrichtung angeordnet sind.

7. Ein-/Ausstiegsvorrichtung nach einem der Ansprüche 3 bis 6, **dadurch gekennzeichnet, dass** sie für mindestens einen Schiebetritt (2) mehrere Zentriereinrichtungen (4, 5) aufweist, welche insbesondere nebeneinander angeordnet sind.

8. Ein-/Ausstiegsvorrichtung nach einem der vorhergehenden Ansprüche, **dadurch gekennzeichnet, dass** der Rahmen (1) für mindestens einen Schiebetritt (2) Führungsvorrichtungen, insbesondere Gleitschienen (6), für das Einschieben der Schiebetritte (2) in den Rahmen (1) aufweist.

9. Ein-/Ausstiegsvorrichtung nach einem der Ansprüche 3 bis 8, **dadurch gekennzeichnet, dass** ein Zentrierelement als Zapfen (4) und das damit zusammenwirkende Zentrierelement als entsprechende Buchse (5) ausgebildet ist.

10. Ein-/Ausstiegsvorrichtung nach Anspruch 9, **dadurch gekennzeichnet, dass** der Zapfen (4) einen kegelförmigen oder kegelstumpfförmigen Abschnitt aufweist.

11. Ein-/Ausstiegsvorrichtung nach Anspruch 9 oder 10, **dadurch gekennzeichnet, dass** der Zapfen (4) am Rahmen (1) und die Buchse (5) am Schiebetritt (2) angeordnet ist.

12. Ein-/Ausstiegsvorrichtung nach einem der vorhergehenden Ansprüche, **dadurch gekennzeichnet, dass** mindestens ein Schiebetritt (2) und der Rahmen (1) derart ausgestaltet sind, dass der Schiebetritt (2) auch um 180° bezüglich einer Drehachse, welche parallel zur Ausfahrrichtung (A) verläuft, gedreht in den Rahmen (1) einschiebbar ist.

13. Ein-/Ausstiegsvorrichtung nach einem der vorhergehenden Ansprüche, **dadurch gekennzeichnet, dass** mindestens ein Schiebetritt (2) als Antrieb einen im Schiebetritt (2) angeordneten elektrischen Motor (15) und eine Spindelvorrichtung (17) aufweist.

14. Ein-/Ausstiegsvorrichtung nach einem der vorhergehenden Ansprüche, **dadurch gekennzeichnet, dass** mindestens ein Schiebetritt (2) eine Federkraftbremse und eine Notentriegelungsvorrichtung, insbesondere eine Brems-Lüftungseinheit (22), aufweist.

15. Ein-/Ausstiegsvorrichtung nach einem der vorhergehenden Ansprüche, **dadurch gekennzeichnet, dass** der Rahmen (1) eine zur Trittfläche (13) parallel verlaufende geschlossene Fläche (11) aufweist, an welcher mindestens eine schalldämmende Matte (12) angeordnet ist.

16. Ein-/Ausstiegsvorrichtung nach einem der vorhergehenden Ansprüche, **dadurch gekennzeichnet, dass** im Bereich der Einschuböffnung (10) ein Wasserauffangblech am Rahmen (1) angeordnet ist.

17. Ein-/Ausstiegsvorrichtung nach einem der vorhergehenden Ansprüche, **dadurch gekennzeichnet, dass** sie einen Sicherheitsschalter (19) aufweist, welcher bei eingefahrenem Zustand des Ausschubs (62) betätigt wird und eine Haltefunktion für den Ausschub (62) aufweist.

18. Ein-/ Ausstiegsvorrichtung nach einem der vorhergehenden Ansprüche, **dadurch gekennzeichnet, dass** der Rahmen (1) mittels ausrichtbaren Befestigungsvorrichtungen (3) am Fahrzeug befestigt ist.

## Claims

1. A boarding and deboarding apparatus for a public transport vehicle with a first sliding step (2), said sliding step (2) being adapted to be pushed through an insertion opening (10) into a frame (1) solidly connected to a vehicle and comprising a extendable system (62) with a tread (13), said system being extendable and retractable through a drive (15), and said boarding and deboarding apparatus comprising at least one fastening device for said sliding step (2), said fastening device incorporating two fastening elements (8, 9) respectively disposed on the frame (1) and on the sliding step (2) for fastening said sliding step (2) to the frame (1), **characterized in**
**that** said boarding and deboarding apparatus comprises at least one second sliding step (2) that is disposed above or beneath said first sliding step (2).

2. The boarding and deboarding apparatus as set forth in claim 1, **characterized in that** it comprises at least one fastening device (8, 9) for each sliding step (2).

3. The boarding and deboarding apparatus as set forth in claim 1 or 2, **characterized in that** it comprises a centering system for at least one sliding step (2), said centering system incorporating two centering elements (4, 5) respectively solidly disposed on the frame (1) and on the sliding step (2), said centering elements cooperating in such a manner that the sliding step (2) is positioned in a given position when the sliding step (2) is being pushed into the frame (1).

4. The boarding and deboarding apparatus as set forth in any one of the previous claims, **characterized in that** it comprises an electric plug system for at least one sliding step (2), said electric plug system incorporating two plug elements (50, 51), one being solidly disposed on the frame (1) and one being solidly disposed on the sliding step (2), said plug elements cooperating in such a manner that one obtains a more specifically water-tight plug-connection for the electric connection of the sliding step (2) when one sliding step (2) is in the pushed-in condition.

5. The boarding and deboarding apparatus as set forth in claim 3 or 4, **characterized in that** all the sliding steps (2) are equipped equally with respect to the fastening elements (9) and to the centering elements (5) as well as, in particular, to the plug elements (50, 51).

6. The boarding and deboarding apparatus as set forth in any one of the previous claims, **characterized in that** the fastening devices (8, 9) are disposed in the region of the insertion opening (10) and that the centering devices (4, 5) are disposed in the region of the apparatus that is located opposite the insertion opening.

7. The boarding and deboarding apparatus as set forth in any one of the claims 3 through 6, **characterized in that** it comprises several centering devices (4, 5) for at least one sliding step (2), said centering devices being in particular disposed in a side-by-side relationship.

8. The boarding and deboarding apparatus as set forth in any one of the previous claims, **characterized in that**, for at least one sliding step (2), the frame (1) comprises guide devices, more specifically sliding rails (6), for pushing the sliding steps (2) into the frame (1).

9. The boarding and deboarding apparatus as set forth in any one of the claims 3 through 8, **characterized in that** a centering element is configured to be a pin (4) and that the centering element cooperating therewith is configured to be a mating bushing (5).

10. The boarding and deboarding apparatus as set forth in claim 9, **characterized in that** the pin (4) comprises a conical or truncated portion.

11. The boarding and deboarding apparatus as set forth in claim 9 or 10, **characterized in that** the pin (4) is disposed on the frame (1) and the bushing (5) on the sliding step (2).

12. The boarding and deboarding apparatus as set forth in any one of the previous claims, **characterized in that** at least one sliding step (2) and the frame (1) are equipped so that the sliding step (2) may also be pushed into the frame (1) rotated 180° with respect to an axis of rotation, which extends parallel to the direction of extension (A).

13. The boarding and deboarding apparatus as set forth in any one of the previous claims, **characterized in that** at least one sliding step (2) comprises an electric motor (15), which is disposed in said sliding step (2) and acts as the drive, and a spindle device (17).

14. The boarding and deboarding apparatus as set forth in any one of the previous claims, **characterized in that** at least one sliding step (2) comprises a spring-actuated brake and an emergency release device, in particular a brake-venting unit (22).

15. The boarding and deboarding apparatus as set forth in any one of the previous claims, **characterized in that** the frame (1) comprises a closed surface (11) that extends parallel to the tread (13), at least one sound-absorbing mat (12) being disposed thereon.

16. The boarding and deboarding apparatus as set forth in any one of the previous claims, **characterized in that** a water collecting metal sheet is disposed on the frame (1) in the region of the insertion opening (10).

17. The boarding and deboarding apparatus as set forth in any one of the previous claims, **characterized in that** it comprises a safety switch (19) that is actuated in the retracted position of the extendable system (62) and comprises a retaining function for said extendable system (62).

18. The boarding and deboarding apparatus as set forth in any one of the previous claims, **characterized in that** the frame (1) is fastened to the vehicle by means of orientable fastening devices (3).

## Revendications

1. Dispositif d'embarquement et de débarquement pour un véhicule de transport en commun, comprenant une première marche coulissante (2), ladite marche coulissante (2) pouvant être introduite en glissant, à travers une ouverture d'introduction (10), dans un cadre (1) solidaire d'un véhicule et présentant un élément d'extension (62) qui est apte à être rentré et sorti par un mécanisme d'entraînement (15) et qui comprend une surface de marche (13), et ledit dispositif d'embarquement et de débarquement présentant pour ladite marche coulissante (2) au moins un dispositif de fixation qui comprend respectivement un élément de fixation (8, 9) disposé sur ledit cadre (1) et un disposé sur ladite marche coulissante (2), par le biais desquels la marche coulissante (2) peut être fixée sur ledit cadre (1), **caractérisé par le fait que** ledit dispositif d'embarquement et de débarquement comprend au moins une deuxième marche coulissante (2) qui est disposée au dessus ou au-dessous de la première marche coulissante (2).

2. Dispositif d'embarquement et de débarquement selon la revendication 1, **caractérisé par le fait qu'**il comprend au moins un dispositif de fixation (8, 9) pour chacune des marches coulissantes (2).

3. Dispositif d'embarquement et de débarquement selon la revendication 1 ou 2, **caractérisé par le fait qu'**il présente un dispositif de centrage pour au moins une marche coulissante (2), ledit dispositif de centrage comprenant respectivement un élément de centrage (4, 5) qui est solidaire du cadre (1) et un qui est solidaire de la marche coulissante (2) et qui agissent de concert les uns avec les autres de telle sorte que, lorsque a marche coulissante (2) est introduite en glissant dans ledit cadre (1), la marche coulissante (2) sera positionnée dans une position donnée.

4. Dispositif d'embarquement et de débarquement selon l'une quelconque des revendications précédentes, **caractérisé par le fait qu'**il comprend pour au moins une marche coulissante (2) un dispositif mâle-femelle électrique (2) qui comprend des éléments mâles-femelles (50, 51) dont l'un est solidaire du cadre (1) et l'autre est solidaire de la marche coulissante (2) et qui agissent de concert les uns avec les autres de telle sorte que, lorsqu'une marche coulissante (2) est rentrée, on aura une connexion mâle-femelle en particulier étanche à l'eau pour le raccordement électrique de la marche coulissante (2).

5. Dispositif d'embarquement et de débarquement selon la revendication 3 ou 4, **caractérisé par le fait que** toutes les marches coulissantes (2) sont conçues de manière identique en ce qui concerne les éléments de fixation (9) et les éléments de centrage (5) ainsi que, en particulier, les éléments mâles-femelles (50, 51).

6. Dispositif d'embarquement et de débarquement selon l'une quelconque des revendications précédentes, **caractérisé par le fait que** lesdits dispositifs de fixation (8, 9) sont disposés au niveau de ladite ouverture d'introduction (10) et que les dispositifs de centrage (4, 5) sont disposés dans la zone du dispositif qui est située en vis-à-vis de l'ouverture d'introduction.

7. Dispositif d'embarquement et de débarquement selon l'une quelconque des revendications 3 à 6, **caractérisé par le fait qu'**il présente pour au moins une marche coulissante (2) plusieurs dispositifs de centrage (4, 5) qui sont disposés en particulier les uns à côté des autres.

8. Dispositif d'embarquement et de débarquement selon l'une quelconque des revendications précédentes, **caractérisé par le fait que** ledit cadre (1) présente pour au moins une marche coulissante (2) des dispositifs de guidage, en particulier des glissières (6), destinés à introduire en glissant les marches coulissantes (2) dans le cadre (1).

9. Dispositif d'embarquement et de débarquement selon l'une quelconque des revendications 3 à 8, **caractérisé par le fait qu'**un élément de centrage est réalisé sous forme d'un tenon (4) et l'élément de centrage agissant de concert avec celui-ci est réalisé sous forme d'une douille correspondante (5).

10. Dispositif d'embarquement et de débarquement selon la revendication 9, **caractérisé par le fait que** ledit tenon (4) présente un tronçon conique ou tronconique.

11. Dispositif d'embarquement et de débarquement selon la revendication 9 ou 10, **caractérisé par le fait que** ledit tenon (4) est disposé sur le cadre (1) et ladite douille (5) est disposée sur la marche coulissante (2).

12. Dispositif d'embarquement et de débarquement selon l'une quelconque des revendications précédentes, **caractérisé par le fait qu'**au moins une marche coulissante (2) et ledit cadre (1) sont réalisés de telle manière que la marche coulissante (2) puisse être introduite dans le cadre (1) également dans une position où elle est tournée de 180° par rapport à un axe de rotation qui s'étend parallèlement à la direction de sortie (A).

13. Dispositif d'embarquement et de débarquement selon l'une quelconque des revendications précédentes, **caractérisé par le fait qu'**une marche coulissante (2) au moins comprend, en tant que dispositif d'entraînement, un moteur électrique (15) disposé dans la marche coulissante (2) ainsi qu'un dispositif à broche (17).

14. Dispositif d'embarquement et de débarquement selon l'une quelconque des revendications précédentes, **caractérisé par le fait qu'**une marche coulissante (2) au moins comprend un frein à ressort et un dispositif de déverrouillage de secours, en particulier une unité de freinage-aération (22).

15. Dispositif d'embarquement et de débarquement selon l'une quelconque des revendications précédentes, **caractérisé par le fait que** ledit cadre (1) présente une surface fermée (11) qui s'étend parallèlement à la surface de marche (13) et sur laquelle est disposé au moins un matelas insonorisant (12).

16. Dispositif d'embarquement et de débarquement selon l'une quelconque des revendications précédentes, **caractérisé par le fait qu'**une tôle de réception d'eau est disposée sur ledit cadre (1), au niveau de ladite ouverture d'introduction (10).

17. Dispositif d'embarquement et de débarquement selon l'une quelconque des revendications précédentes, **caractérisé par le fait qu'**il comprend un interrupteur de sécurité (19) qui est actionné lorsque ledit élément d'extension (62) est rentré et qui présente une fonction d'arrêt pour ledit élément d'extension (62).

18. Dispositif d'embarquement et de débarquement selon l'une quelconque des revendications précédentes, **caractérisé par le fait que** ledit cadre (1) est fixé sur le véhicule au moyen de dispositifs de fixation (3) aptes à être ajustés.
